# EUROPÄISCHE PATENTSCHRIFT

(11) **EP 2 005 272 B1**
(45) Veröffentlichungstag und Bekanntmachung des Hinweises auf die Patenterteilung: **14.08.2013**
(21) Anmeldenummer: 07727322.5
(22) Anmeldetag: 26.03.2007
(51) Int. Cl.: G05D 7/01, G05D 16/10, F16K 31/122

(54) **Hydrostatische Profilschienenführung**
Hydrostatic Profile Rail Guide
Dispositif de guidage à rail profile hydrostatique

(30) Priorität: 29.03.2006 DE 102006014446
(43) Veröffentlichungstag der Anmeldung: 24.12.2008
(73) Patentinhaber: Schaeffler Technologies AG & Co. KG, 91074 Herzogenaurach (DE)
(72) Erfinder: BAUER, Wolfgang, 66292 Riegelsberg (DE); RUDY, Bettina, 66501 Kleinbundenbach (DE)
(86) Internationale Anmeldenummer: PCT/EP2007/052849
(87) Internationale Veröffentlichungsnummer: WO 2007/113151

(56) Entgegenhaltungen:
- EP-A- 1 353 254
- DE-A1- 3 425 164
- DE-A1-102004 040 155
- US-A- 4 570 667
- US-A- 5 996 615

## Beschreibung

Die vorliegende Erfindung betrifft eine hydrostatische Profilschienenführung mit einem auf einer Führungsschiene hydrostatisch gelagerten Führungswagen.

An Hydraulikleitungen angeschlossene Stromregelventile regeln den Durchfluss von Hydraulikflüssigkeit durch die Hydraulikleitung, wobei das Regelverhalten des Stromregelventils mehr oder weniger unabhängig ist von der Viskosität der Hydraulikflüssigkeit und von dem anliegenden Druck am Eingang des Druckregelventils. Die Erfindung betrifft auch hydraulische Anlagen, bei denen derartige Stromregelventile angeordnet sind. Die vorliegende Erfindung betrifft hydrostatische Profilschienenführungen, bei denen derartige Stromregelventile zum Einsatz kommen.

Das Dokument DE 10 2004 040 155 A1 zeigt den relevanten Stand der Technik.

Von der Firms Hydac International werden 2-Wege-Stromregelventile nach DIN ISO 1219 für ölhydraulische Anlagen angeboten, die den austretenden Volumenstrom durch einen Regelvorgang konstant halten. Der Volumenstrom ist vom Druck und von der Viskosität weitgehend unabhängig. Die Größe des Volumenstromes wird durch eine Festblende (Messblende) vorgegeben und kann in einem bestimmten Bereich verstellt werden. Diese Stromregelventile werden in ölhydraulischen Anlagen eingebaut, und sind im Einbauzustand von außen nicht mehr zugänglich. Ein unbefugtes Verstellen ist demzufolge nicht möglich. Diese Stromregelventile zeichnen sich durch eine kompakte Bauweise und platzsparenden Einbau in Anschlussgehäuse, Steuerblöcke und insbesondere bei beengten Einbauverhältnissen aus.

Derartige Stromregelventile sind Festblendenventile mit nachgeschalteten Differenzdruckregler für ölhydraulische Anlagen. Der Differenzdruckregler besteht im Wesentlichen aus Regelkolben, Druckfeder, Regelblende und des Stellteils, insbesondere der Stellschraube zum Einstellen der Regeldruckdifferenz. Die Messblende bestimmt den Volumenstrom-Einstellbereich. Eine Durchströmung des Stromregelventils von der Eintrittsöffnung zur Austrittsöffnung bewirkt ein Druckgefälle an der Messblende. Der Differenzdruckregler geht in eine Regelposition, die dem Kräftegleichgewicht aus der Kraftwirkung Druckgefälle über die Messblende multipliziert mit der Regelkolbenfläche einerseits und der Druckfederkraft andererseits entspricht. Mit steigendem Durchfluss, d.h., mit größer werdendem Druckgefälle wird der Querschnitt der Regelblende entsprechend dem erhöhten Druckgefälle solange verringert, bis wieder ein Kräftegleichgewicht vorliegt. Durch das kontinuierliche Nachregeln des Differenzdruckreglers in Abhängigkeit von dem anliegenden Druckgefälle wird ein konstanter Volumenstrom auf dem Weg der Hydraulikflüssigkeit von der Eintrittsöffnung zur Austrittsöffnung sichergestellt. In der Gegenrichtung kann das Ventil ungeregelt durchströmt werden.

Werden solche Stromregelventile beispielsweise in hydrostatischen Profilschienenführungen eingesetzt, bei der ein Führungswagen auf einer Führungsschiene hydrostatisch gelagert ist, werden Drucktaschen zwischen der Führungsschiene und dem Führungswagen mit Hydraulikflüssigkeit beaufschlagt. Je nach Belastung des Führungswagens kann es erforderlich sein, das Regelverhalten des Differenzdruckreglers anzupassen. Im Fall der eingangs beschriebenen bekannten Stromregelventile würde das bei einer Profilschienenführung zur Folge haben, dass diese Profilschienenführung zunächst außer Betrieb genommen werden muss, der Führungswagen dann soweit geöffnet werden muss, bis Zugang zu dem Stromregelventil besteht, um schließlich die Stellschraube zum Verändern des Regelverhaltens des Differenzdruckreglers an die gegebene Belastung des Führungswagens einzustellen. Im Anschluss an diese Einstellarbeiten muss der Führungswagen wieder komplettiert und die hydrostatische Profilschienenführung wieder in Betrieb genommen werden. Diese Vorgehensweise ist aufwendig und kann - je nach Einsatzfall derartiger Profilschienenführungen - einen vorübergehenden Produktionsstillstand zur Folge haben.

Aufgabe der vorliegenden Erfindung ist es, ein Stromregelventil nach den Merkmalen des Oberbegriffs des Anspruchs 1 anzugeben, bei dem das Regelverhalten des Differenzdruckreglers auf einfache Art und Weise an gegebene Anforderungen angepasst werden kann.

Erfindungsgemäß wird diese Aufgabe dadurch gelöst, dass das Stellteil einen außerhalb der Hydraulikleitung zugänglich vorgesehenen Bedienabschnitt zum Stellen des Stellteils aufweist. Anders als bei den bekannten Stromregelventilen sieht das erfindungsgemäße Stromregelventil diesen Bedienabschnitt vor, der beispielsweise eine genormte Werkzeugaufnahme aufweisen kann. Denkbar ist zum Beispiel ein Torx-Ansatz oder ein Innensechskant oder ein Außensechskant, um mit handelsüblichen Werkzeugen an diesem Bedienabschnitt angreifen zu können. Ein Öffnen einer ölhydraulischen Anlage, beispielsweise einer hydrostatischen Profilschienenführung entfällt. Ohne komplizierte zusätzlichen Arbeiten kann das Stellteil zum Einstellen des Regelverhaltens des Differenzdruckreglers an dem Bedienabschnitt vorgenommen werden.

Vorzugsweise ist das Stellteil als Gehäuse ausgebildet, in dem der Differenzdruckregler untergebracht ist. Das Gehäuse kann beispielsweise rohrförmig ausgebildet und an seinem Außenumfang mit einem Außengewinde versehen sein. Das Stellteil kann dann mit seinem Außengewinde in eine anlagenseitig vorgesehene Gehäusebohrung eingeschraubt werden. Die Einschraubtiefe dieses Gehäuses in die Gewindebohrung des Anschlussbauteiles bestimmt dann das Regelverhalten des Differenzdruckreglers. Das bedeutet, auf Seiten der ölhydraulischen Anlage kann es genügen, eine Gehäusebohrung an einem Anschlussbauteil vorzusehen, wobei diese Gewindebohrung zum einen der Aufnahme des Stromregelventils und zugleich zum Einstellen des Regelverhaltens des Differenzdruckreglers vorgesehen ist.

In bekannter Weise kann der Differenzdruckregler eine Regelblende aufweisen, die einen gegenüber dem Stellteil beweglich angeordneten Regelkolben aufweist, der gemeinsam mit einer an dem Stellteil vorgesehenen Öffnung einen einstellbaren Strömungsquerschnitt zur geregelten Durchströmung mit Hydraulikflüssigkeit begrenzt.

Dieser Differenzdruckregler kann problemlos in einer Gehäusebohrung des als Gehäuse ausgebildeten Stellteiles längsverschieblich aufgenommen werden, wobei der Regelkolben mit seiner Steuerkante gemeinsam mit wenigstens einer das Gehäuse durchdringenden Öffnung einen einstellbaren Strömungsquerschnitt zur geregelten Durchströmung mit Hydraulikflüssigkeit begrenzt.

Der Differenzdruckregler weist vorzugsweise eine Stützkolben auf, wobei eine Feder einerseits an dem Stützkolben und andererseits an dem Regelkolben angreift. Ein Stützabstand für die Feder zwischen dem Stützkolben und dem Regelkolben ist vorzugsweise einstellbar. Bei diesem derart weitergebildeten Differenzdruckregler kann ein Einstellen des Regelverhaltens auf einfache Art und Weise dadurch erreicht werden, dass der Stützabstand durch Einschrauben des Gehäuses gegenüber dem gestellfest abgestützten Stützkolben vorgenommen wird. Anlagenseitig kann dann ein Anschlag für den Stützkolben vorgesehen sein, so dass zur Einstellung des Regelverhaltens unter einem Einschrauben des Gehäuses in die Gehäusebohrung eine Relativverschiebung zwischen dem Stützkolben und dem Gehäuse mit dem daran abgestützten Regelkolben vorgenommen werden kann.

Die an der hydraulischen Anlage vorgesehene Gewindebohrung zur Aufnahme von erfindungsgemäßen Stromregelventilen kann einen die Gewindebohrung begrenzenden Teil aufweisen, der zum Anschlagen des oben beschriebenen Stützkolbens des Differenzdruckreglers vorgesehen ist.

Das als Gehäuse ausgebildete Stellteil kann in vorteilhafter Weise an seinem von der Gewindebohrung abgewandten zugänglichen Ende mit dem Bedienabschnitt zum Angreifen eines Werkzeuges versehen sein.

Erfindungsgemäße Stromregelventile eignen sich in besonderer Weise zur Verwendung in hydrostatischen Profilschienenführungen, denn bei wechselnden Belastungen der hydrostatischen Profilschienenführung kann das Regelverhalten des Differenzdruckreglers durch einfaches Verstellen an dem Bedienabschnitt des Stellteiles an die gegebenen Belastungen der Profilschienenführung angepasst werden.

Die Erfindung wird durch Vorrichtungsanspruch 1 definiert.

Nachstehend wird die Erfindung anhand von zwei in insgesamt sechs Figuren abgebildeten Ausführungsbeispielen näher erläutert. Es zeigen:
- Figur 1: eine perspektivische Darstellung einer hydrostatischen Profilschienenführung,
- Figur 2: die hydrostatische Profilschienenführung im Querschnitt, in schematischer Darstellung,
- Figur 3: ein Funktionsschema der erfindungsgemäßen hydrostatischen Profilschienenführung,
- Figur 4: eine Draufsicht auf die erfindungsgemäße hydrostatische Profilschienenführung,
- Figur 5: ein erfindungsgemäßes Stromregelventil im Längsschnitt und
- Figur 6: das Stromregelventil aus Figur 5, eingeschraubt in die Profilschienenführung.

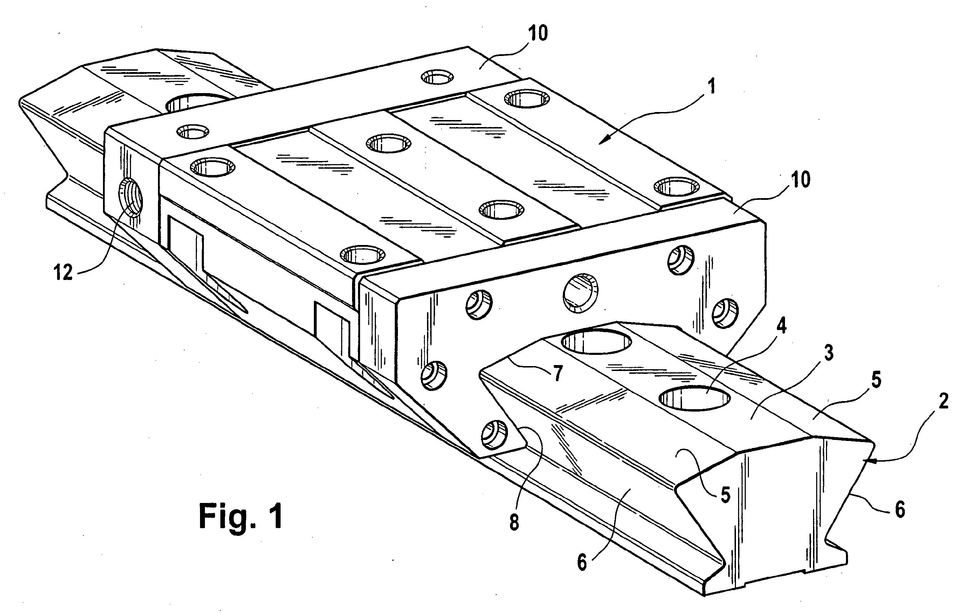

Die in den Figuren 1 bis 4 abgebildete erfindungsgemäße Profilschienenführung umfasst einen Führungswagen 1, der auf einer Führungsschiene 2 hydrostatisch gelagert ist. Die Führungsschiene 2 hat einen Kopfabschnitt, der dem Führungswagen 1 zugewandt ist und einen Fußabschnitt, der einem hier nicht abgebildeten Maschinenteil zugewandt ist, auf dem die Führungsschiene 2 befestigt ist. An ihrem Kopfabschnitt ist die Führungsschiene 2 entlang der Längsachse der Profilschienenführung mit einer Mittelfläche 3 versehen. Die Führungsschiene 2 ist mit einer Vielzahl von entlang der Führungsschiene angeordneten Durchgangsöffnungen 4 versehen, durch die hier nicht abgebildete Befestigungsschrauben zum Befestigen der Führungsschiene an dem weiter oben erwähnten Maschinenteil vorgesehen sind. Diese Durchgangsöffnungen 4 durchbrechen die Mittelfläche 3 der Führungsschiene 2.

Die Führungsschiene 2 ist an ihrem Kopfabschnitt mit zwei oberen Lagerflächen 5 und zwei unteren Lagerflächen 6 versehen. Die oberen Lagerflächen 5 sind eben ausgebildet; Sie sind zu der Mittelfläche 3 geneigt angeordnet, wobei die eine obere Lagerfläche 5 zur einen Seite der Mittelfläche 3 und die andere obere Lagerfläche 5 zur anderen Längsseite der Mittelfläche 3 angeordnet ist. Die unteren Lagerflächen 6 sind unterhalb der oberen Lagerflächen 5 angeordnet. Diese unteren Lagerflächen 6 sind sowohl zu der Mittelfläche 3 als auch zu den oberen Lagerflächen 5 geneigt angeordnet.

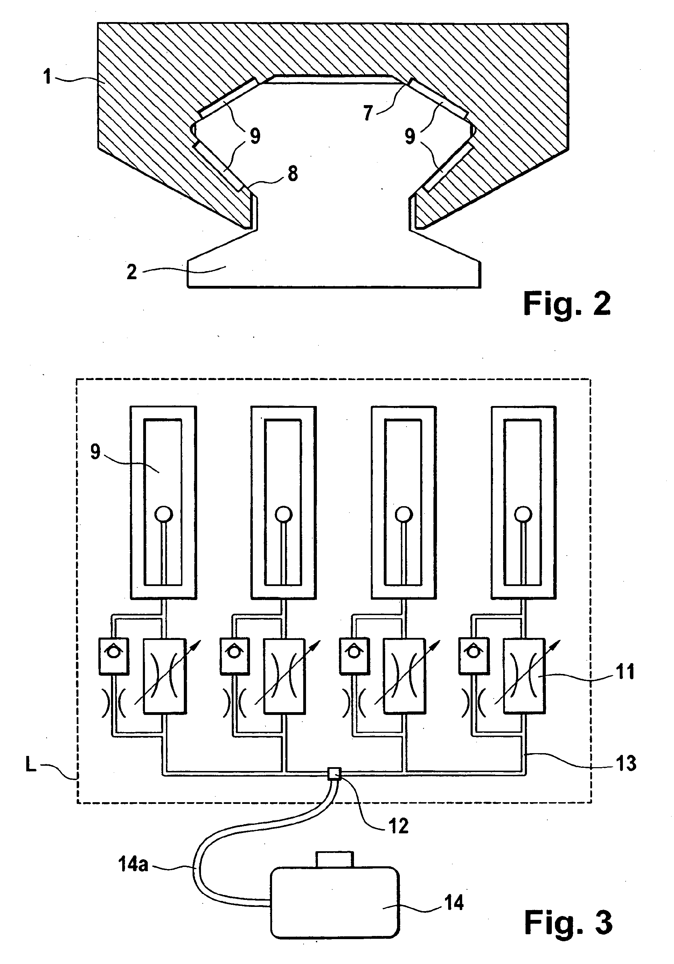

Der Führungswagen ist mit weiteren oberen und unteren Lagerflächen 7, 8 versehen, wobei die oberen und unteren Lagerflächen 5, 6, 7, 8 des Führungswagens und der Führungsschiene einander zugeordnet sind. In Figur 2 sind diese Lagerflächen angedeutet.

Der Figur 2 ist ferner zu entnehmen, dass an dem Führungswagen 1 insgesamt vier Drucktaschen 9 für die oberen und unteren Lagerflächen 5, 6 ausgebildet sind, die mit Hydraulikflüssigkeit beaufschlagt werden können. Zwischen den Lagerflächen 5, 6, 7, 8 kann im Betrieb der hydrostatischen Profilschienenführung ein stetiger Schmierfilm aufgebaut werden.

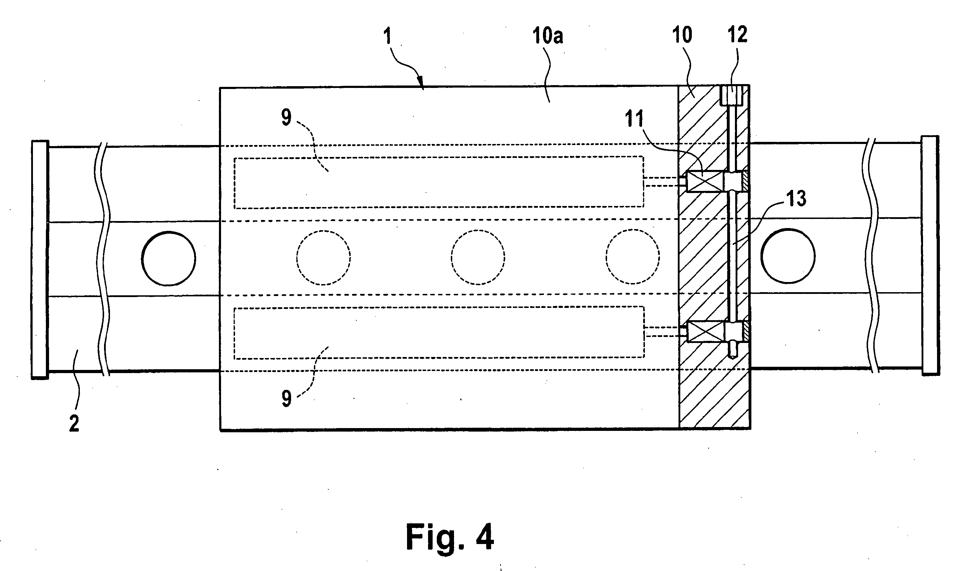

Zwei dieser Drucktaschen 9 sind in der Figur 4 in einer Draufsicht auf die erfindungsgemäße hydrostatische Profilschienenführung schematisch abgebildet. Dieser schematischen Abbildung kann entnommen werden, dass der Führungswagen 1 einen Tragkörper 10a und ein daran stirnseitig befestigtes Kopfstück 10 aufweist. Das Kopfstück 10 ist mit mehreren Stromregelventilen 11 versehen. Diese Stromregelventile 11 sind in das Kopfstück integriert. Für jede Drucktasche 9 ist ein Stromregelventil 11 vorgesehen. Die Stromregelventile 11 sind parallel geschaltet. Sie münden in einen gemeinsamen Sammelanschluss 12, der an einer Seite des Kopfstückes 12 angeordnet ist. In dieses Kopfstück 10 sind ferner Zuführkanäle 13 integriert, die einerseits an alle Stromregelventile 11 und die andererseits an den gemeinsamen Sammelanschluss 12 angeschlossen sind. An diesen Sammelanschluss 12 kann beispielsweise eine Ölpumpe über einen Druckschlauch angeschlossen werden.

Figur 1 zeigt auch das in Figur 4 lediglich schematisch abgebildete Kopfstück 10 mit dem Sammelanschluss 12.

Figur 3 schließlich zeigt in schematischer Abbildung die Schaltung der Drucktaschen 9 und der Stromregelventile 11. Mit einer gestrichelten Linie L ist hier die Systemgrenze des Führungswagens angedeutet. Diese Figur zeigt ferner eine externe Druckquelle 14 die. über einen Druckschlauch 15 an den Sammelanschluss 12 angeschlossen ist. Hier ist deutlich die parallele Schaltung der Stromregelventile 11 zu erkennen. Ferner sind hier auch die Wege der Zuführkanäle 13 zu erkennen, die einerseits an den zentralen Sammelanschluss 12 und die andererseits jeweils an einen der Stromregelventile 11 angeschlossen sind. Die Stromregelventile 11 sind schließlich an die Drucktaschen 9 angeschlossen; Jedem Stromregelventil 11 ist genau eine Drucktasche 9 zugeordnet.

Insbesondere der Figur 1 ist zu entnehmen, dass alle Stromregelventile 11 innerhalb des Lichtraumprofils der hydrostatischen Profilschienenführung integriert sind. Das bedeutet, dass eine erfindungsgemäße hydrostatische Profilschienenführung problemlos gegen eine Profilschienenwälzführung gemäß

DIN 645-1 ausgetauscht werden kann. In dieser zitierten DIN 645-1 sind die Außenmaße von Profilschienenwälzführungen definiert. Erfindungsgemäße hydrostatische Profilschienenführungen können mit entsprechenden Außenmaßen versehen sein.

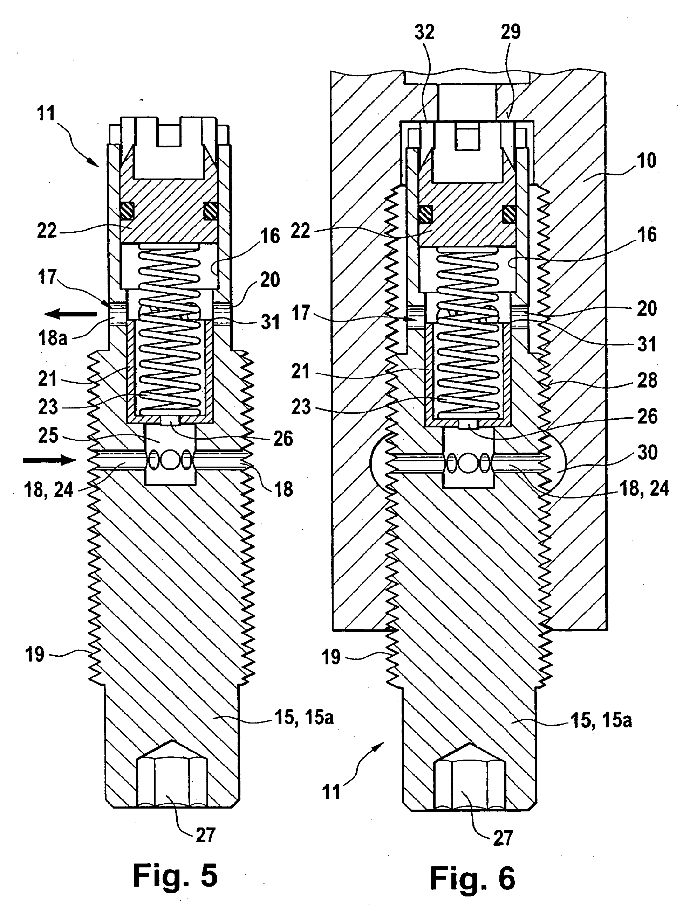

Figur 5 zeigt im Längsschnitt ein erfindungsgemäßes Stromregelventil 11. Das Stromregelventil 11 weist ein zylindrisches Gehäuse 15 auf, in dessen Gehäusebohrung 16 ein Differenzdruckregler 17 untergebracht ist. Dieser Differenzdruckregler 17 sorgt dafür, dass Hydraulikflüssigkeit, die in eine Eintrittsöffnung 18 des Stromregelventils 11 eintritt und aus einer Austrittsöffnung 18a des Stromregelventils 11 wieder austritt, konstant bleibt, auch wenn der anliegende Druck an der Eintrittsöffnung 18 schwankt.

Das Gehäuse 15 ist an seinem Außenumfang mit einem Außengewinde 19 zum Einschrauben des Stromregelventils 11 in eine hier nicht abgebildete Gehäusebohrung eines Anschlussbauteiles versehen.

Der Differenzdruckregler 17 weist eine Regelblende 20 auf, die einen einstellbaren Strömungsquerschnitt zur geregelten Durchströmung mit Hydraulikflüssigkeit begrenzt. Diese Regelblende 20 umfasst einen Regelkolben 21, der in der Gehäusebohrung 16 längsverschieblich aufgenommen ist. Benachbart zu dem Regelkolben 21 und gleichachsig angeordnet ist ein Stützkolben 22, der ebenfalls längsverschieblich in der Gehäusebohrung 16 aufgenommen ist. Dieser Stützkolben 22 ist verliersicher in dem Gehäuse 15 aufgenommen. An dem Gehäuse 15 können hier nicht abgebildete, in die Gehäusebohrung 16 eingreifende Laschen vorgesehen sein, die ein Herausfallen des Stützkolbens 22 aus dem Gehäuse verhindern.

In der Gehäusebohrung 16 ist ferner eine Schraubendruckfeder 23 gleichachsig zu dem Stützkolben 22 und dem Regelkolben 21 angeordnet. Diese Schraubendruckfeder 23 ist einerseits an dem Stützkolben 22 abgestützt und greift andererseits an dem Regelkolben 21 an. In der Darstellung gemäß Figur 5 drückt die Schraubendruckfeder 23 den Regelkolben 21 in Richtung auf ein axiales Ende der Gehäusebohrung 16 des Gehäuses 15. Ein Stützabstand für die Schraubendruckfeder 23 zwischen dem Stützkolben 22 und dem Regelkolben 21 ist veränderlich einstellbar. Eine Reduzierung dieses Stützabstandes bedeutet eine Zunahme der Vorspannung der Schraubendruckfeder 23, wodurch das Regelverhalten des Differenzdruckreglers 17 verändert wird.

Das Gehäuse 15 ist mit einer Vielzahl von Querbohrungen 24 versehen, die sternförmig auf die zentrale Achse des Stromregelventils 11 gerichtet sind und schließlich in eine zentrale Sammelbohrung 25 einmünden. An diese Sammelbohrung 25 schließt der Regelkolben 21 mit einer Messblende 26 an.

Das Gehäuse 15 ist als Stellteil 15a zum Verstellen des Regelverhaltens des Differenzdruckreglers 17 ausgebildet, was nachstehend näher erläutert wird. Zum Einstellen des Differenzdruckreglers 17 ist das Gehäuse 15 an seinem in der Figur 5 unten abgebildeten Ende mit einem Bedienabschnitt 27 versehen, der vorliegend als Innensechskant zum Eingriff eines Innensechskantschlüssels ausgebildet ist.

Figur 6 zeigt das Stromregelventil 11, eingeschraubt in das Kopfstück 10 des Führungswagens 1. Das Kopfstück 10 ist zur Aufnahme des Stromregelventils 11 mit einer Gewindebohrung 28 versehen, in die das Gehäuse 15 mit seinem Außengewinde 19 eingeschraubt ist. Am Ende der Gewindebohrung 28 ist an dem Kopfstück 10 eine Schulter 29 ausgebildet, wobei der Stützkolben 22 mit einem Anschlag 32 zum Anschlagen an die Schulter 29 versehen ist. Die Gewindebohrung 28 ist an einen Ringkanal 30 angeschlossen, durch den Hydraulikflüssigkeit in die Querbohrungen 24 einströmen kann.

Nachstehend wird die Funktionsweise des erfindungsgemäßen Stromregelventils näher erläutert. Wenn Hydraulikflüssigkeit unter Druck über die Querbohrung 24 und die Sammelbohrung 25 gegen die Messblende 26a drückt, strömt die Hydraulikflüssigkeit durch den Regelkolben 21 und fließt durch die Regelblende 20, und gelangt schließlich zur Austrittsöffnung 18a. Bei der Druckzunahme der Hydraulikflüssigkeit an der Eintrittsöffnung 18 hebt der Regelkolben 21 entgegen der Federkraft der Schraubendruckfeder 23 unter dem Druck der Hydraulikflüssigkeit in der Sammelbohrung 25 ab und bewegt sich in Richtung auf den Stützkolben 22, der gestellfest an der Schulter 29 abgestützt ist. Unter dieser Verlagerung des Regelkolbens 21 wird ein Strömungsquerschnitt der Regelblende 20 durch ein Vorschieben einer Steuerkante 31 des Regelkolbens 21 reduziert. Diese Reduzierung des Strömungsquerschnitts hat eine Reduzierung der Druckdifferenz zwischen Eintrittsöffnung 18 und Austrittsöffnung 18a zur Folge, so dass der Regelkolben 21 dazu tendiert, unter der Wirkung der Schraubendruckfeder 23 wieder auf das unter Ende der Gehäusebohrung 16 zu verschieben. Diese rückwärtige Bewegung des Regelkolbens 21 hat wiederum eine Vergrößerung des Strömungsquerschnitts der Regelblende 20 zur Folge. Zum Ändern des Regelverhaltens des Differenzdruckreglers 17 genügt es, mit einem Werkzeug an dem frei von außen zugänglichen Bedienabschnitt 27 anzugreifen und das Stellteil 15a zu drehen, um den Stützabstand zwischen dem Stützkolben und dem Regelkolben zu verändern.

Auf einfache Art und Weise können erfindungsgemäße Stromregelventile 11 in anlagenseitig vorgesehene Gewindebohrungen eingeschraubt werden, wobei anlagenseitig keine weiteren Einrichtungen erforderlich sind, um ein Einstellen des Regelverhaltens der erfindungsgemäßen Stromregelventile zu ermöglichen. Durch das als Einschraubbauteil ausgebildete erfindungsgemäße Stromregelventil kann zugleich mit dem Einschrauben in die Gehäusebohrung ein Einstellen des Regelverhaltens des Differenzdruckreglers 17 vorgenommen werden.

### Bezugszahlenliste

| | | | |
|---|---|---|---|
| 1 | Führungswagen | 26 | Messblende |
| 2 | Führungsschiene | 27 | Bedienabschnitt |
| 3 | Mittelfläche | 28 | Gewindebohrung |
| 4 | Durchgangsöffnung | 29 | Schulter |
| 5 | obere Lagerfläche | 30 | Ringkanal |
| 6 | untere Lagerfläche | 31 | Steuerkante |
| 7 | obere Lagerfläche | 32 | Anschlag |
| 8 | untere Lagerfläche | | |
| 9 | Drucktasche | | |
| 10 | Kopfstück | | |
| 10a | Tragkörper | | |
| 11 | Stromregelventile | | |
| 12 | Sammelanschluss | | |
| 13 | Zuführkanal | | |
| 14 | Druckquelle | | |
| 15 | Gehäuse | | |
| 15a | Stellteil | | |
| 16 | Gehäusebohrung | | |
| 17 | Differenzdruckregler | | |
| 18 | Eintrittsöffnung | | |
| 18a | Austrittsöffnung | | |
| 19 | Außengewinde | | |
| 20 | Regelblende | | |
| 21 | Regelkolben | | |
| 22 | Stützkolben | | |
| 23 | Schraubendruckfeder | | |
| 24 | Querbohrung | | |
| 25 | Sammelbohrung | | |

## Patentansprüche

1. Hydrostatische Profilschienenführung, mit einem auf einer Führungsschiene (2) hydrostatisch gelagerten Führungswagen (1), der an der Führungsschiene (1) zugewandten Seiten mit mehreren Drucktaschen (9) zur Beaufschlagung mit Hydraulikflüssigkeit versehen ist, **dadurch gekennzeichnet, dass** jeweils ein für eine Hydraulikleitung vorgesehenes Stromregelventil (11) für jede der Drucktaschen (9) vorgesehen ist, wobei das Stromregelventil (11) mit einer Austrittsöffnung (18a) für Hydraulikflüssigkeit, mit einer Eintrittsöffnung (18) für Hydraulikflüssigkeit, mit einem Differenzdruckregler (17) zur druckunabhängigen Bereitstellung eines konstanten Volumenstroms der Hydraulikflüssigkeit, und mit einem Stellteil (15a) zum Einstellen des Regelverhaltens des Differenzdruckreglers (17) versehen ist, **wobei** das Stellteil (15a) einen außerhalb der Hydraulikleitung zugänglich vorgesehenen Bedienabschnitt (27) zum Stellen des Stellteils (26) aufweist.

2. Hydrostatische Profilschienenführung nach Anspruch 1, bei der der Führungswagen (1) einen die Drucktaschen (9) aufweisenden Tragkörper (10a) sowie ein stirnseitig an dem Tragkörper (10a) angeordnetes, mit den Stromregelventilen (11) versehenes Kopfstück (10) aufweist.

3. Hydrostatische Profilschienenführung nach Anspruch 2, bei der der Bedienabschnitt (27) von außerhalb des Führungswagens (1) zugänglich ist.

4. Hydrostatische Profilschienenführung nach Anspruch 1, bei der das Stellteil (15a) als Gehäuse (15) ausgebildet ist, in dem der Differenzdruckregler (17) untergebracht ist.

5. Hydrostatische Profilschienenführung nach Anspruch 1, bei der das Stellteil (15a) ein Schraubgewinde zum Einschrauben in eine Gewindebohrung (28) eines Anschlussbauteiles aufweist, wobei eine Einschraubtiefe des Stellteils (15a) in der Gewindebohrung (28) das Regelverhalten des Differenzdruckreglers (17) bestimmt.

6. Hydrostatische Profilschienenführung nach Anspruch 1, bei der der Differenzdruckregler (17) eine Regelblende (20) aufweist, die einen gegenüber dem Stellteil (26) beweglich angeordneten Regelkolben (21) aufweist, der gemeinsam mit einer an dem Stellteil (15a) vorgesehenen Öffnung einen einstellbaren Strömungsquerschnitt zur geregelten Durchströmung mit Hydraulikflüssigkeit begrenzt.

7. Hydrostatische Profilschienenführung nach Anspruch 6, bei der in einer Gehäusebohrung (16) des als Gehäuse (15) ausgebildeten Stellteils (15a) ein Regelkolben (21) der Regelblende (20) längsverschieblich aufgenommen ist, wobei der Regelkolben (21) mit einer Steuerkante (31) gemeinsam mit wenigstens einer das Gehäuse (15) durchdringenden Öffnung einen einstellbaren Strömungsquerschnitt zur geregelten Durchströmung mit Hydraulikflüssigkeit begrenzt.

8. Hydrostatische Profilschienenführung nach Anspruch 7, bei der in der Gehäusebohrung (16) ein Stützkolben (22) längsverschieblich aufgenommen ist, wobei eine einerseits an dem Stützkolben (22) abgestützte Feder andererseits an dem Regelkolben (21) angreift, wobei ein Stützabstand für die Feder zwischen dem Stützkolben (22) und dem Regelkolben (21) einstellbar ist.

9. Hydrostatische Profilschienenführung nach Anspruch 4, bei der der Stützabstand durch Verschieben des Gehäuses (15) gegenüber dem gestellfest abgestützten Stützkolben (22) einstellbar ist.

10. Hydrostatische Profilschienenführung nach Anspruch 9, bei der der Regelkolben (21) mit einer Messblende (26a) zum Durchtritt von Hydraulikflüssigkeit versehen ist.

11. Hydrostatische Profilschienenführung nach Anspruch 9, bei der der Stützkolben (22) mit einem Anschlag (32) zum Anschlagen an ein Anschlussteil versehen ist.

12. Hydrostatische Profilschienenführung nach einem oder mehreren der vorangegangenen Ansprüche, bei der das Anschlussteil mit einer Gewindebohrung (28) zum Einschrauben des Stromregelventils (11) versehen ist, wobei der Stützkolben (22) mit seinem Anschlag (32) an einem die Gewindebohrung (28) begrenzenden Teil des Anschlußteils anschlägt.

## Claims

1. Hydrostatic profiled-rail guide, having a guide carriage (1) which is mounted hydrostatically on a guide rail (2) and is provided, on sides which face the guide rail (1), with a plurality of pressure pockets (9) for loading with hydraulic fluid, **characterized in that** in each case one flow control valve (11) which is provided for a hydraulic line is provided for each of the pressure pockets (9), the flow control valve (11) being provided with an outlet opening (18a) for hydraulic fluid, with an inlet opening (18) for hydraulic liquid, with a differential-pressure regulator (17) for the pressure-independent provision of a constant volumetric flow of the hydraulic fluid, and with a setting element (15a) for setting the regulating behaviour of the differential-pressure regulator (17), the setting part (15a) having an operating portion (27), provided so as to be accessible outside the hydraulic line, for setting the setting part (26).

2. Hydrostatic profiled-rail guide according to Claim 1, in which the guide carriage (1) has a carrying body (10a) which has the pressure pockets (9) and a head piece (10) which is arranged on the carrying body (10a) on the end side and is provided with the flow control valves (11).

3. Hydrostatic profiled-rail guide according to Claim 2, in which the operating portion (27) is accessible from outside the guide carriage (1).

4. Hydrostatic profiled-rail guide according to Claim 1, in which the setting part (15a) is configured as a housing (15), in which the differential-pressure regulator (17) is accommodated.

5. Hydrostatic profiled-rail guide according to Claim 1, in which the setting part (15a) has a screw thread for screwing into a threaded hole (28) of a connection component, a screw-in depth of the setting part (15a) in the threaded hole (28) defining the regulating behaviour of the differential-pressure regulator (17).

6. Hydrostatic profiled-rail guide according to Claim 1, in which the differential-pressure regulator (17) has a regulating diaphragm (20) which has a regulating piston (21) which is arranged movably with respect to the setting part (26) and, together with an opening which is provided on the setting part (15a), delimits an adjustable flow cross section for the regulated throughflow with hydraulic fluid.

7. Hydrostatic profiled-rail guide according to Claim 6, in which a regulating piston (21) of the regulating diaphragm (20) is received in a longitudinally displaceable manner in a housing bore (16) of the setting part (15a) which is configured as a housing (15), the regulating piston (21) delimiting by way of a control edge (31), together with at least one opening which penetrates the housing (15), an adjustable flow cross section for the regulated throughflow with hydraulic fluid.

8. Hydrostatic profiled-rail guide according to Claim 7, in which a supporting piston (22) is received in a longitudinally displaceable manner in the housing bore (16), a spring which is supported on one side on the supporting piston (22) acting on the other side on the regulating piston (21), it being possible for a supporting spacing for the spring between the supporting piston (22) and the regulating piston (21) to be set.

9. Hydrostatic profiled-rail guide according to Claim 4, in which the supporting spacing can be set by displacement of the housing (15) with respect to the supporting piston (22) which is supported fixedly on the frame.

10. Hydrostatic profiled-rail guide according to Claim 9, in which the regulating piston (21) is provided with a measuring diaphragm (26a) for the passage of hydraulic fluid.

11. Hydrostatic profiled-rail guide according to Claim 9, in which the supporting piston (22) is provided with a stop (32) for striking against a connection part.

12. Hydrostatic profiled-rail guide according to one or more of the preceding claims, in which the connection part is provided with a threaded hole (28) for screwing in the flow control valve (11), the supporting piston (22) striking with its stop (32) against a part of the connection part, which part delimits the threaded hole (28).

## Revendications

1. Dispositif de guidage à rail profilé hydrostatique, comprenant un chariot de guidage (1) monté de manière hydrostatique sur un rail de guidage (2), lequel chariot de guidage est pourvu, sur des côtés tournés vers le rail de guidage (1), de plusieurs poches de pression (9) en vue d'une sollicitation par un fluide hydraulique, **caractérisé en ce qu'**une soupape de régulation de débit (11) respective prévue pour une conduite hydraulique est prévue pour chacune des poches de pression (9), la soupape de régulation de débit (11) étant pourvue d'une ouverture de sortie (18a) pour le fluide hydraulique, d'une ouverture d'entrée (18) pour le fluide hydraulique, d'un régulateur de pression différentielle (17) pour fournir, de manière indépendante de la pression, un débit volumique constant du fluide hydraulique et d'une partie de réglage (15a) pour régler le comportement de régulation du régulateur de pression différentielle (17), la partie de réglage (15a) comprenant une section de commande (27) prévue de manière à être accessible depuis l'extérieur de la conduite hydraulique, pour régler la partie de réglage (26).

2. Dispositif de guidage à rail profilé hydrostatique selon la revendication 1, dans lequel le chariot de guidage (1) comprend un corps de support (10a) comprenant les poches de pression (9) ainsi qu'une pièce de tête (10) pourvue des soupapes de régulation de débit (11) et disposée du côté frontal sur le corps de support (10a).

3. Dispositif de guidage à rail profilé hydrostatique selon la revendication 2, dans lequel la section de commande (27) est accessible depuis l'extérieur du chariot de guidage (1).

4. Dispositif de guidage à rail profilé hydrostatique selon la revendication 1, dans lequel la partie de réglage (15a) est réalisée sous forme de boîtier (15) dans lequel est logé le régulateur de pression différentielle (17).

5. Dispositif de guidage à rail profilé hydrostatique selon la revendication 1, dans lequel la partie de réglage (15a) comprend un filetage en vue d'un vissage dans un alésage fileté (28) d'une partie de raccordement, une profondeur de vissage de la partie de réglage (15a) dans l'alésage fileté (28) déterminant le comportement de régulation du régulateur de pression différentielle (17).

6. Dispositif de guidage à rail profilé hydrostatique selon la revendication 1, dans lequel le régulateur de pression différentielle (17) comprend un diaphragme de régulation (20) qui comprend un piston de régulation (21) disposé de manière mobile par rapport à la partie de réglage (26), lequel piston de régulation limite, conjointement avec une ouverture prévue sur la partie de réglage (15a), une section transversale d'écoulement réglable en vue d'un écoulement régulé de fluide hydraulique.

7. Dispositif de guidage à rail profilé hydrostatique selon la revendication 6, dans lequel un piston de régulation (21) du diaphragme de régulation (20) est reçu de manière longitudinalement mobile dans un alésage de boîtier (16) de la partie de réglage (15a) réalisée sous forme de boîtier (15), le piston de régulation (21) pourvu d'une arête de commande (31) limitant, conjointement avec au moins une ouverture traversant le boîtier (15), une section transversale d'écoulement réglable en vue d'un écoulement régulé de fluide hydraulique.

8. Dispositif de guidage à rail profilé hydrostatique selon la revendication 7, dans lequel un piston d'appui (22) est reçu de manière longitudinalement mobile dans l'alésage du boîtier (16), un ressort s'appuyant d'un côté contre le piston d'appui (22) venant en prise de l'autre côté avec le piston de régulation (21), une distance d'appui pour le ressort entre le piston d'appui (22) et le piston de régulation (21) pouvant être réglée.

9. Dispositif de guidage à rail profilé hydrostatique selon la revendication 4, dans lequel la distance d'appui peut être réglée par déplacement du boîtier (15) par rapport au piston d'appui (22) supporté de manière solidaire du bâti.

10. Dispositif de guidage à rail profilé hydrostatique selon la revendication 9, dans lequel le piston de régulation (21) est pourvu d'un diaphragme de mesure (26a) pour le passage d'un fluide hydraulique.

11. Dispositif de guidage à rail profilé hydrostatique selon la revendication 9, dans lequel le piston d'appui (22) est pourvu d'une butée (32) destinée à venir en butée contre une partie de raccordement.

12. Dispositif de guidage à rail profilé hydrostatique selon l'une quelconque ou plusieurs des revendications précédentes, dans lequel la partie de raccordement est pourvue d'un alésage fileté (28) en vue d'un vissage de la soupape de régulation de débit (11), le piston d'appui (22) venant en butée, par sa butée (32), contre une partie de la partie de raccordement qui limite l'alésage fileté (28).
